# EUROPEAN PATENT APPLICATION

(11) **EP 4 027 471 A1**
(43) Date of publication of application: **13.07.2022**
(21) Application number: 21840414.3
(22) Date of filing: 27.04.2021
(51) Int. Cl.: H02G 11/00

(54) **AUTOMATIC CABLE DRAGGING SYSTEM FOR COAL SHEARER**

(30) Priority: 20.11.2020 CN 202011316395
(71) Applicant: Shanghai, Tiandi Mining Equipment Technology Co., Ltd, Shanghai 201401 (CN); Shanghai Branch, Tiandi Science&Technology Co., Ltd, Shanghai 200030 (CN)
(72) Inventor: WANG, Zhenqian, Shanghai 200030 (CN); HU, Jing, Shanghai 200030 (CN); HU, Tao, Shanghai 200030 (CN); ZHOU, Changfei, Shanghai 200030 (CN); DONG, Chao, Shanghai 200030 (CN); SONG, Zhen, Shanghai 200030 (CN); LIU, Kunmin, Shanghai 200030 (CN); ZHANG, Liqiang, Shanghai 200030 (CN); GU, Enyang, Shanghai 200030 (CN); DING, Haichun, Shanghai 200030 (CN); HE, Lining, Shanghai 200030 (CN); MU, Jie, Shanghai 200030 (CN)
(74) Representative: Wang, Bo
(86) International application number: PCT/CN2021/090200
(87) International publication number: WO 2022/105114

(57) **Abstract**

The invention relates to an automatic towing cable system of a coal mining machine. The space in a cable trough is divided into three layers, namely an upper layer, a middle layer and a lower layer, by a dividing plate assembly; lower parts of a towing cable trolley and a constraint cage towing rope device are limited in the middle layer and can only slide in the length direction of the cable trough back and forth; the constraint cage towing rope device is fixed relative to the coal mining machine; a steel wire rope goes through the cable trough in the length direction; one end of the steel wire rope bypasses a fixed pulley at a head-gate end of the cable trough of an AFC (armoured-face conveyor) to change the direction and then is connected with the lower part of the constraint cage towing rope device, and the other end bypasses a fixed pulley at a tail-gate end of the cable trough to change the direction, then bypasses a movable pulley of the towing cable trolley to change the direction again, and returns to the tail-gate end of the cable trough to be fixed; a cable clamp set with one end fixed to the head-gate end of the cable trough extends from the head-gate end of the cable trough to the tail-gate end in the upper layer of the cable trough in the length direction: the cable clamp set firstly goes through the constraint cage of the constraint cage towing rope device and then reaches the location of the towing cable trolley. There the cable clamp set bypasses the roller of the towing cable trolley to change the direction and then extends to a coal mining machine and at last is fixed to the coal mining machine; the head gate and the tail gate which the automatic towing cable system concerned are interchangeable for general layout of the invented system. The invented automatic towing cable system of the coal mining machine has following great advantages: it can guide itself in the cable trough of AFC while the coal mining machine haulages, needs no external input power, the cable clamp set concerned will not fall off from the cable trough any more and the steel wire rope concerned will be prevented from escaping out of the cable trough. Thereby the invented automatic towing cable system is very safe during utilization.

## Description

### Technical field

The invention relates to a towing cable device of a coal mining machine, particularly to a self-guidance automatic towing cable system of coal mining machine, which dispenses with external input power.

### Background art

An electric-traction coal mining machine on a working face of a coal mine usually drags a power supply cable and a cooling water tube for power supply and cooling dust-settling of the coal mining machine. The cable and the water tube are usually arranged in cable clamp sets, and are finally connected to an electric cabinet and a water valve of the coal mining machine from a working face end through a cable trough of an AFC. One end of the cable clamp sets is fixed, the other end is connected with a towing cable device of the coal mining machine, and the cable clamp sets are arranged along the whole working face in the cable trough. The coal mining machine drags the cable clamp sets to move together in a process of walking back and forth on the working face for coal cutting.

In a process that the coal mining machine repeatedly cuts coal from the head gate of the working face to the tail gate of the working face and from the tail gate to the head gate, at least three layers of partial cable clamp sets connected with the towing cable device of the coal mining machine are overlapped inevitably. On a working face in a thin coal seam, the cable trough is slightly shallow. Therefore, if three or more layers of cable clamp sets are overlapped, the uppermost layer falls out of the cable trough easily. On a high inclination-angle working face, if three or more layers of cable clamp sets are overlapped, the uppermost layer falls out of the cable trough easily because of itself weight. When the cable clamp set penetrated by the cable and the water tube falls out of the cable trough, the cable clamp set is prone to interference with equipment outside the cable trough and suffers from crushing by the haulage system of the coal mining machine if the cable is dragged continuously, and the power supply cable may be damaged if the cable is dragged continuously, resulting in a large potential safety hazard. In addition, along with the implementation and promotion of intelligentized unmanned working faces in fully mechanized mining faces, an automatic towing cable system of a coal mining machine is a key technology that should be solved.

Up to the present, an automatic towing cable system with external independent power is provided, but this automatic towing cable system needs a power-supply device with the variable-frequency control reducer which is located at the head gate or the tail gate of the working face, and the output speed of the variable-frequency control reducer should keep the same with the hauling speed of the coal mining machine. The power-supply device cost is relatively high, the power-supply device is complicated to mount, a delay exists in speed matching between the output speed of the variable-frequency control reducer and the hauling speed of the coal mining machine, and so this kind of automatic towing cable system with external independent power has gotten relatively bad use feedback. An unpowered system which is directly connected with the coal mining machine by a steel wire rope and drags a towing cable mechanism is also provided, but has the disadvantages that the steel wire rope is completely exposed in a cable trough. If the rope breaks, a large potential safety hazard is caused. In addition, this kind of towing cable mechanism has no guide device during dragging, so resulted in high friction.

### Summary of the invention

The invention aims to provide an automatic towing cable system of a coal mining machine. The invented automatic towing cable system of the coal mining machine has following great advantages: it can guide itself in the cable trough of AFC while the coal mining machine haulages, needs no external input power, the cable clamp set concerned will not fall off from the cable trough any more and the steel wire rope concerned will be prevented from escaping out of the cable trough. Thereby the invented automatic towing cable system is very safe during utilization.

The invention provides a main technical scheme:
An automatic towing cable system of a coal mining machine comprises a towing cable trolley, a constraint cage towing rope device, a guide device, fixed pulleys, a steel wire rope, an extension spring, a cable clamp set and a dividing plate assembly; the dividing plate assembly comprises a fully-enclosed plate and a semi-enclosed plate; the semi-enclosed plate is provided with a slot accommodating the full length in the length direction; the semi-enclosed plate and the fully-enclosed plate are detachably and fixedly mounted in a cable trough of an AFC in an one-upper and one-lower manner, respectively; the space in the cable trough is divided into three layers, namely an upper layer, a middle layer and a lower layer, by the fully-enclosed plate and the semi-enclosed plate; the guide device is mounted in the space of the lower layer within the full length of the cable trough; the towing cable trolley comprises a roller at an upper part, as well as a walking guide frame and a movable pulley at a lower part; the constraint cage towing rope device comprises a constraint cage at an upper part, and a walking guide frame at a lower part; the walking guide frames of the towing cable trolley and the constraint cage towing rope device are limited in the space of the middle layer of the cable trough and can only slide in the length direction of the cable trough back and forth; both the roller and the constraint cage are arranged above the semi-enclosed plate; the fixed pulleys are arranged outside two ends of a head-gate end of the cable trough and a tail-gate end of the cable trough of the AFC; the constraint cage towing rope device is relatively fixed and connected with a machine body of the coal mining machine; the cable clamp set is provided with one end connected with the machine body of the coal mining machine, and the other end extending to the position of the head-gate end of the cable trough or the tail-gate end of the cable trough to be relatively fixed with the head-gate end of the cable trough or the tail-gate end of the cable trough; the remaining part of the cable clamp set bypasses the roller and horizontally goes through the constraint cage in the length direction of the cable trough; compared with the connection of the machine body of the coal mining machine and the towing cable trolley as well as the cable clamp set, the constraint cage towing rope device is closer to the other end of the cable clamp set; the steel wire rope goes through the lower part of a guide pulley of the guide device when horizontally going through the space of the lower layer of the cable trough; one end of the steel wire rope bypasses the fixed pulley at the head-gate end of the cable trough or the tail-gate end of the cable trough to change the direction, then extends to the tail-gate end of the cable trough or the head-gate end of the cable trough, and is indirectly connected with the lower part of the constraint cage towing rope device via the extension spring, and the other end of the steel wire rope bypasses the fixed pulley at the tail-gate end of the cable trough or the head-gate end of the cable trough to change the direction, then extends to the head-gate end of the cable trough or the tail-gate end of the cable trough, then bypasses the movable pulley of the towing cable trolley to change the direction again, extends to the tail-gate end of the cable trough or the head-gate end of the cable trough, and is fixed relative to the tail-gate end of the cable trough or the head-gate end of the cable trough; a cable and a water tube of the coal mining machine extend and are arranged in the cable clamp set; the length of the cable clamp set meets requirements as follows: when the coal mining machine is positioned at a start point of a working face and the cable clamp set is in a tensioning state, the position of an axis of the roller tends to an end point of the working face, and the distance between the position of the axis of the roller and the middle point of the working face is not shorter than one half of the length of the machine body of the coal mining machine.

A plurality of guide devices are provided, and every cable trough is internally equipped with one guide device.

The guide devices further comprise U-shaped parts and fixed blocks, the guide pulleys are rotationally supported on axles via bearings, two ends of each axle are mounted on the corresponding fixed block, the fixed blocks are fixed in the inverted U-shaped parts, and the inverted U-shaped parts are detachably suspended and mounted on the fully-enclosed plate.

Each guide device is provided with at least three guide pulleys, the plurality of guide pulleys are arranged at intervals in the length direction of the guide device, the guide pulleys at two ends are horizontally swung relative to the U-shaped part within limits, the guide pulley at the middle is fixed relative to the U-shaped part, and the axis of the guide pulley at the middle extends in the width direction of the guide device.

The guide pulleys at the two ends are horizontally swung relative to the U-shaped part within limits in the preferable manner: (1) a plurality of pairs of axle holes used for mounting the axles are formed at intervals in the length direction of the guide device, and the axle holes closest to the two ends are kidney-shaped holes extending in the length direction of the guide device; or (2) each guide pulley corresponds to one fixed block, two ends of the axle of each guide pulley are fixedly mounted on the corresponding fixed block, and tops of the two fixed blocks closest to the two ends are horizontally and rotationally connected relative to the U-shaped part and are limited in rotational angle range by arranging a limit device at the same time.

The walking guide frame comprises a front strip-shaped body and a back strip-shaped body arranged in parallel, and left and right ends of the strip-shaped bodies are shaped like rectangular pyramids.

An axis of the roller on the towing cable trolley is arranged horizontally in the gob-goaf direction, an axis of the movable pulley is arranged vertically, and the movable pulley is arranged between the front strip-shaped body and the back strip-shaped body of the walking guide frame on the towing cable trolley.

A fixed pulley provided with an enclosed housing is preferably adopted as the fixed pulley.

The invention has beneficial effects:
The automatic towing cable system of the coal mining machine is compact in space and convenient to mount and dismount, the constraint cage towing rope device and the towing cable trolley are connected by the steel wire rope, and the cable clamp sets of a towing cable system perform towing in the same direction at the same speed as those of the coal mining machine during walking, thereby keeping two layers of the cable clamp sets in a tight state all the time, effectively avoiding a failure that the uppermost layer of the cable clamp sets falls out of the cable trough easily if three or more layers of the cable clamp sets are overlapped on a working face in a thin coal seam as well as a high inclination-angle working face, and meanwhile laying the foundation for development of intelligentized unmanned working faces of the coal mining machine.

The cable clamp sets provided by the invention are formed to be an upper layer and a lower layer, the lower layer of cable clamp set goes through the constraint cage, and the constraint cage can straighten the lower layer of cable clamp set on one hand, and can clean away debris like coal briquettes beside the lower layer of cable clamp set on the other hand. At the same time, the steel wire rope behind the forward direction of the coal mining machine is enclosed by the lower layer of cable clamp set, and is prevented from being leapt out if the steel wire rope herein breaks, thereby avoiding hurting an operator who follows behind the coal mining machine.

The guide devices and the fixed pulleys characterized by enclosed structures are adopted, so that the steel wire rope is completely enclosed at the lower layer and during direction changes between the head-gate end of the cable trough and the tail-gate end of the cable trough. And the abrasion, caused by the steel wire rope in relative motion with other tubes and equipment are avoided.

The lower part of the constraint cage towing rope device and the steel wire rope are indirectly connected by the extension spring, therefore, the steel wire rope can keep certain tension on one hand, and on the other hand, the length change of the steel wire rope can be compensated by utilizing the elastic deformation of the spring during snake-cutting

### Description of the drawings

Fig. 1 is an installation structure diagram of an embodiment of the dividing plate assembly provided by the invention;
Fig. 2 is an installation structure diagram of an embodiment of the guide device provided by the invention;
Fig. 3 is an installation structure diagram of an embodiment of the constraint cage towing rope device provided by the invention;
Fig. 4 is an installation status diagram of the constraint cage towing rope device provided by the invention;
Fig. 5 is a structure diagram of an embodiment of the towing cable trolley provided by the invention;
Fig. 6 is an installation status diagram of the towing cable trolley provided by the invention;
Fig. 7 is a P view of Fig. 6.
Fig. 8 is an installation diagram of the extension spring.
Fig. 9 is an arrangement and distribution system diagram of the cable clamp set provided by the invention;
Fig. 10 is a work process description diagram of the invention during leftward traction of a coal mining machine.
Fig. 11 is a work process description diagram of the invention during rightward traction of a coal mining machine.

References symbols in the drawings:
1. towing cable trolley; 1-1. roller; 1-2. walking guide frame; 1-3. movable pulley; 2. constraint cage towing rope device; 2-1. constraint cage; 2-2. walking guide frame; 2-3. lug; 3. guide device; 3-1. guide pulley; 3-2. U-shaped part; 3-3. fixed block; 4. fixed pulley; 5. steel wire rope; 6. cable trough; 7. cable clamp set; 8-1. fully-enclosed plate; 8-2. semi-enclosed plate; 9. shaft extension connector; 10. extension spring; 11. coal mining machine.

### Detailed description of embodiments

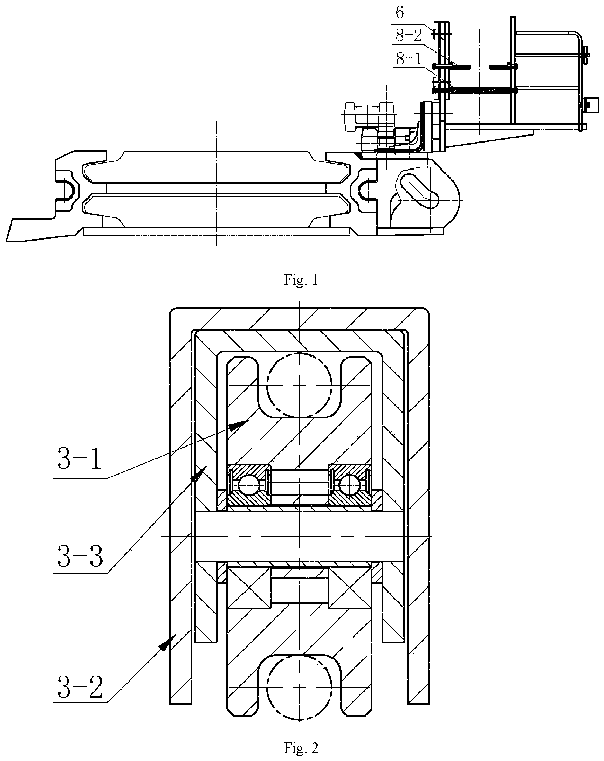

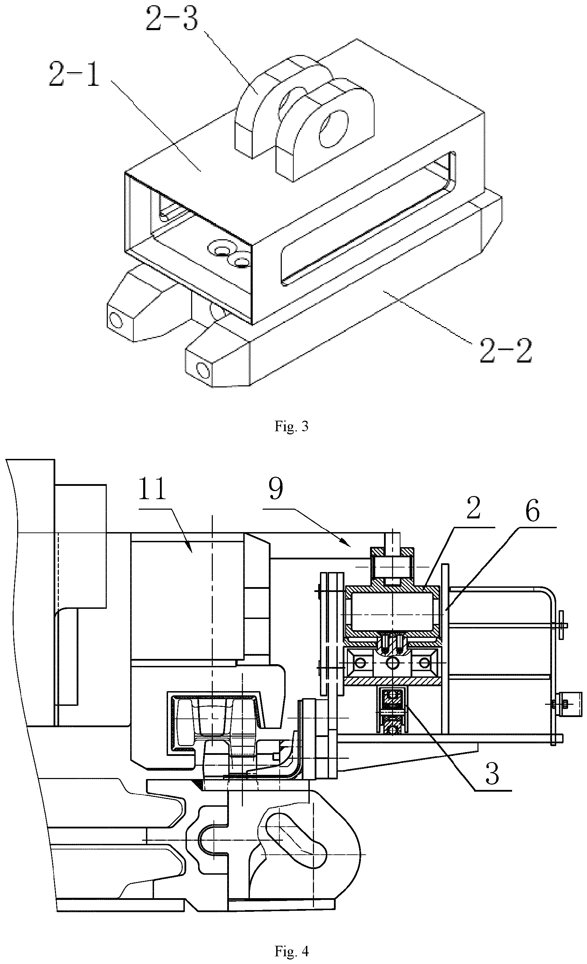

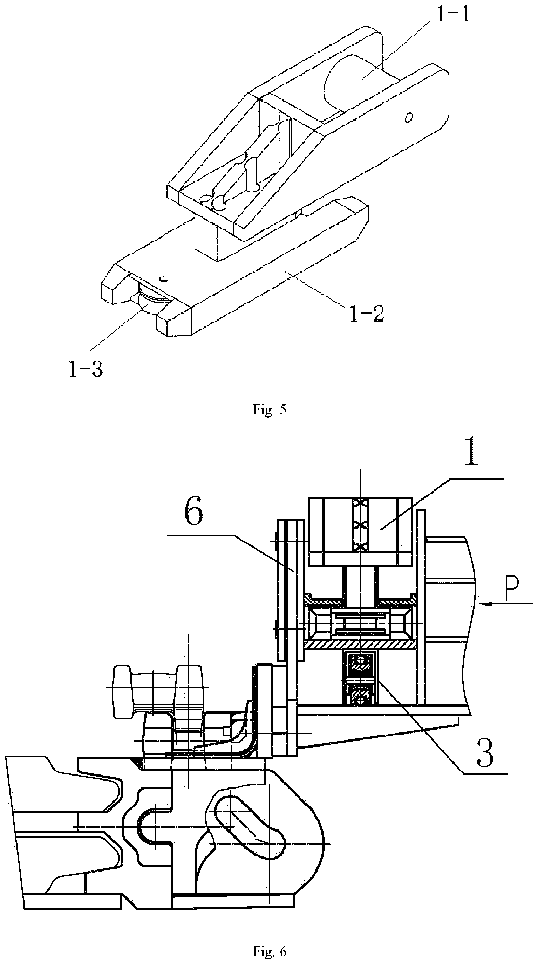

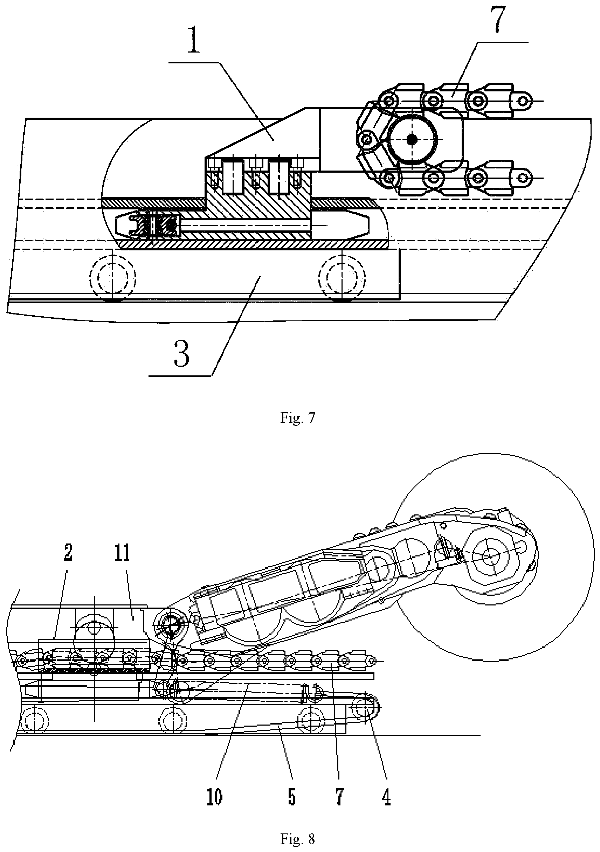

The invention discloses an automatic towing cable system of a coal mining machine (automatic towing cable system for short), as shown in Fig. 1-11, comprising a towing cable trolley 1, a constraint cage towing rope device 2, a guide device 3, fixed pulleys 4, a steel wire rope 5, an extension spring 10, a cable clamp set 7 and a dividing plate assembly; the dividing plate assembly comprises a fully-enclosed plate 8-1 and a semi-enclosed plate 8-2; the semi-enclosed plate is provided with a slot accommodating the full length in the length direction; the semi-enclosed plate can be formed by combining a front plate and a back plate; the semi-enclosed plate and the fully-enclosed plate are detachably and fixedly mounted in a cable trough 6 of an AFC on the gob side of a coal mining machine 11, in an one-upper and one-lower manner, respectively; the space in the cable trough is divided into three horizontal layers, namely an upper layer, a middle layer and a lower layer, by the fully-enclosed plate and the semi-enclosed plate; the lower layer is enclosed, the middle layer is semi-enclosed, and the upper layer is open. The middle layer and the upper layer are connected via the slot. The fully-enclosed plate and the semi-enclosed plate can be fixed on the cable trough by screws or the like, thereby facilitating disassembly, assembly and replacement. The guide device is mounted in the space of the lower layer within the full length of the cable trough. The towing cable trolley comprises a roller 1-1 at an upper part, as well as a walking guide frame 1-2 and a movable pulley 1-3 at a lower part, and the roller 1-1 is used for towing the cable clamp set. The constraint cage towing rope device comprises a constraint cage 2-1 at an upper part, and a walking guide frame 2-2 at a lower part. The constraint cage is provided with a rectangular hollow structure in the length direction of the cable trough. The walking guide frames 1-2 and 2-2 of the towing cable trolley and the constraint cage towing rope device are limited in the space of the middle layer of the cable trough and can only slide in the length direction of the cable trough back and forth, joints of the respective upper parts and lower parts of the towing cable trolley and the constraint cage towing rope device go through the slot in the semi-enclosed plate, and the walking guide frames are always positioned in the middle layer of the cable trough in the height direction. Both the roller and the constraint cage are arranged above the semi-enclosed plate. The towing cable trolley is mainly used for towing the cable clamp set, and meanwhile assists in dragging the steel wire rope, and the constraint cage towing rope device is mainly used for towing the steel wire rope and meanwhile can be used for straightening the cable clamp set.

The fixed pulleys are arranged outside two ends of a head-gate end of the cable trough and a tail-gate end of the cable trough of the AFC. The constraint cage towing rope device is fixedly connected with a machine body of the coal mining machine, and performs synchronous reciprocating movement under the drive of the coal mining machine. The cable clamp set is provided with one end connected with the machine body of the coal mining machine, usually on a towing cable device of the coal mining machine, and the other end extending to the position of the head-gate end of the cable trough (or the tail-gate end of the cable trough) to be relatively fixed with the head-gate end of the cable trough (or the tail-gate end of the cable trough); the remaining part of the cable clamp set bypasses the roller 1-1 and goes through the constraint cage 2-1 in the length direction of the cable trough. The cable clamp set changes directions from the roller, and keeps horizontal. The cable clamp set forms an upper layer of cable clamp set from one end to the roller, and comparatively speaking, a lower layer of cable clamp set goes through the constraint cage. Compared with the connection of the machine body of the coal mining machine and the towing cable trolley as well as the cable clamp set, the constraint cage towing rope device is closer to the other end of the cable clamp seta

The steel wire rope goes through the lower part of a guide pulley 3-1 of the guide device when horizontally going through the space of the lower layer space of the cable trough, and horizontally extends in the length direction of the cable trough under the guide of the guide pulley. One end of the steel wire rope bypasses the fixed pulley at the head-gate end of the cable trough (or the tail-gate end of the cable trough) to change the direction, then extends to the tail-gate end of the cable trough (or the tail-gate end of the cable trough), and is indirectly connected with the lower part, such as a walking guide frame 2-2, of the constraint cage towing rope device via the extension spring, and the other end of the steel wire rope bypasses the fixed pulley at the tail-gate end of the cable trough (or the head-gate end of the cable trough) to change the direction, then extends to the head-gate end of the cable trough (or the tail-gate end of the cable trough), then bypasses the movable pulley 1-3 of the towing cable trolley to change the direction again, extends to the tail-gate end of the cable trough (or the head-gate end of the cable trough), and is fixed relative to the tail-gate end of the cable trough (or the head-gate end of the cable trough). The tightness degree of the steel wire rope is adjusted by the extension spring. The cable clamp set and the steel wire rope, relative to a fixed end of the AFC, are arranged at the head-gate end of the cable trough of the AFC and the tail-gate end of the cable trough of the AFC, respectively. When the constraint cage towing rope device moves to the tail-gate end of the cable trough (or the head-gate end of the cable trough) along with the coal mining machine, the towing cable trolley also moves to the tail-gate end of the cable trough (or the head-gate end of the cable trough).

A cable and a water tube of the coal mining machine extend and are arranged in the cable clamp set. The lower layer of cable clamp set goes through the constraint cage, and the constraint cage can straighten the lower layer of cable clamp set on one hand, and can clean away debris like coal briquettes beside the lower layer of cable clamp set on the other hand. The steel wire rope behind the forward direction of the coal mining machine is enclosed by the lower layer of cable clamp set, and is prevented from being leapt out if the steel wire rope herein breaks, thereby avoiding hurting an operator who follows behind the coal mining machine.

The length of the cable clamp set meets requirements as follows: when the coal mining machine is positioned at a start point of a working face and the cable clamp set is in a tensioning state, the position of an axis of the roller tends to an end point of the working face, and the distance between the position of the axis of the roller and the middle point of the working face is not shorter than one half of the length of the coal mining machine.

The automatic towing cable system is mounted on the cable trough of the AFC on the gob side, and is convenient to mount and easy to dismount, so as to be mounted when required and dismounted when not required.

A plurality of guide devices are provided, and preferably, every cable trough is internally equipped with one guide device, therefore, the guide devices are arranged all the length of the cable troughs and play the role for guidance on the steel wire rope along the whole of cable troughs. The guide devices are mounted at the middles in directions gob-goaf of the lower layers of the cable troughs.

The guide devices further comprise U-shaped parts 3-2 and fixed blocks 3-3, besides the guide pulleys; the guide pulleys 3-1 are rotationally supported on axles via bearings, two ends of each axle are mounted on the corresponding fixed block, the fixed blocks are fixed in the inverted U-shaped parts, and the inverted U-shaped parts are detachably suspended and mounted on the fully-enclosed plate. The U-shaped parts can be made from U-steel. In the embodiment, the U-shaped parts and the fixed blocks are all inverted U-shaped, thus enclosing the steel wire rope.

Furthermore, each guide device is provided with at least three guide pulleys, the plurality of guide pulleys are arranged at intervals in the length direction of the guide device (the length direction of the U-shaped part as well), the guide pulleys at two ends are horizontally swung relative to the U-shaped part within certain limits, tight fit installation is preferably adopted between the axle corresponding to the guide pulley at the middle and the fixed blocks, and the axis of the guide pulley at the middle extends in the width direction of the guide device.

The guide pulleys are horizontally swung relative to the U-shaped part within certain limits in the two manners as follows: (1) a plurality of pairs of axle holes used for mounting the axles are formed at intervals in the length direction of the guide device on the fixed blocks, the axle holes closest to the two ends are kidney-shaped holes extending in the length direction of the guide device, the other axle holes are round holes, and the corresponding guide pulleys has a certain degree of swinging freedom in a horizontal plane because ends of the axle holes closest to the two ends can slide in the kidney-shaped holes. (2) each axle hole corresponds to one fixed block, two ends of the axle of each guide pulley are fixedly mounted on the corresponding fixed block. Tops of the two fixed blocks closest to the two ends are horizontally and rotationally connected relative to the U-shaped part and are limited in rotational angle range by arranging a limit device at the same time, for example, a slide bearing sleeve can be arranged between the fixed block and the U-shaped part.

When two adjacent pans of the AFC are bent horizontally, two adjacent cable troughs and the U-shaped parts of two adjacent guide devices are bent horizontally and synchronously; horizontal swinging of the guide pulleys at two ends of the guide device can partially or even completely offset the influence on guidance of the steel wire rope caused by the guide pulleys at the two ends of the guide device, so as to avoid the steel wire rope from diagonal tensile stress or minimize deflection amplitude.

The walking guide frame comprises a front strip-shaped body and a back strip-shaped body arranged in parallel, such as cuboids; left and right ends of the strip-shaped bodies of the walking guide frame are shaped like pyramids, and used for guidance during left and right reciprocating sliding of the towing cable trolley or the constraint cage towing rope device.

Preferably, the axis of the roller on the towing cable trolley is horizontally set in gob-goaf direction, and the height and the diameter of the roller are set to enable the cable clamp set to keep horizontal at upper and lower sections after bypassing the roller. An axis of the movable pulley can be arranged vertically, and the movable pulley is preferably arranged between the front strip-shaped body and the back strip-shaped body of the walking guide frame on the towing cable trolley. The position of the movable pulley is set reasonably under fully consideration of force analysis and easy pulling when the steel wire rope pulls the towing cable trolley after bypassing the movable pulley. The roller can be mounted on a ribbed plate, and the ribbed plate and the walking guide frame can be positioned by pins and fastened by screws.

An upper part and a lower part of the constraint cage towing rope device can be positioned by pins and fastened by screws. In the embodiment, a lug 2-3 is further arranged at the top of the constraint cage, and is fixedly connected with the body of the coal mining machine via a shaft extension connector 9. In the embodiment, the shaft extension connector 9 is connected between the lug and the wheel box of the coal mining machine, and the constraint cage towing rope device moves horizontally with the coal mining machine at same speed in the length direction of a working face.

A fixed pulley provided with an enclosed housing is preferably adopted as the fixed pulley.

The slot in the embodiment is formed in the middle of the width direction of the cable trough. Accordingly, both the towing cable trolley and the constraint cage towing rope device are configured to be front-back symmetric in structure.

A lug used for connection with the extension spring is further arranged at the lower part of the constraint cage towing rope device.

When the coal mining machine walking, the constraint cage towing rope device, the extension spring, the steel wire rope and the towing cable trolley which are successively connected are driven, and furthermore, the cable clamp set surrounding the roller of the towing cable trolley is pulled to move with the coal mining machine in the same direction at same speed, and always keep two layers in a tight state. The hauling power of the coal mining machine is utilized as the power of the automatic towing cable system, thus avoiding a huge variable-frequency control reducer keeping the same speed as the hauling speed of the coal mining machine from being arranged in a roadway corresponding to the head-gate and the tail-gate, and so reducing an equipment cost.

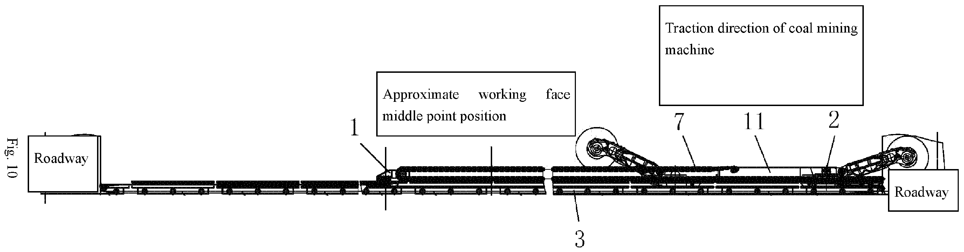

As shown in Fig. 10, when the coal mining machine hauls leftwards, the constraint cage towing rope device fixedly connected with the wheel box of the coal mining machine and the like is hauled leftwards at the same speed as the coal mining machine, and the steel wire rope at the upper layer is pulled by the constraint cage towing rope device via the extension spring to move leftwards. The steel wire rope at the lower layer moves rightwards via the guide device in the lower part of cable trough, the towing cable trolley is pulled by the movable pulley on the towing cable trolley to move leftwards after the steel wire rope changes directions at an end of the left side of the working face, and then the upper layer of cable clamp set is pulled by the towing cable trolley to move leftwards.

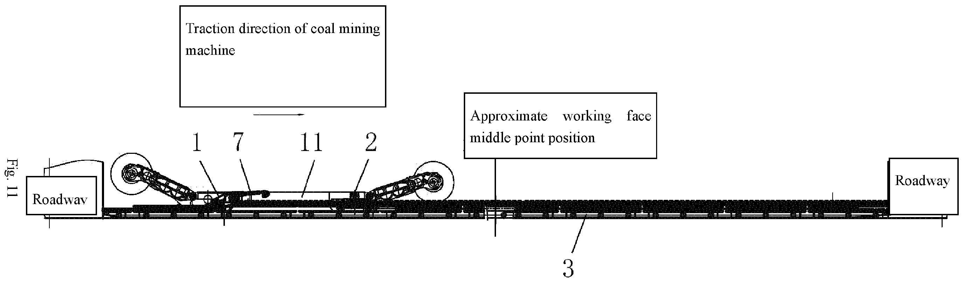

As shown in Fig. 11, when the coal mining machine hauls rightwards, the upper layer of cable clamp set is pulled by the coal mining machine to pull the towing cable trolley bordered around by double layers of cable clamp set to move rightwards, the steel wire rope of the movable pulley, which bordered around the towing cable trolley, moves with the towing cable trolley, and the lower layer of steel wire rope moves leftwards, therefore, the constraint cage towing rope device is pulled by the extension spring to move rightwards at the same speed as the coal mining machine, and system circulation is kept.

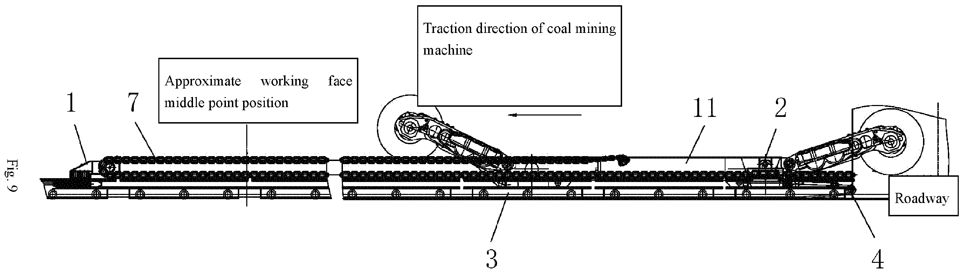

In order to show the present general position of the coal mining machine, an approximate working face middle point position (or an approximate middle point position of a working face) is signed as an additional reference point in Fig. 9-11.

## Claims

1. An automatic towing cable system of a coal mining machine, comprising a towing cable trolley, a constraint cage towing rope device, a guide device, fixed pulleys, a steel wire rope, an extension spring, a cable clamp set and a dividing plate assembly, wherein the dividing plate assembly comprises a fully-enclosed plate and a semi-enclosed plate; the semi-enclosed plate is provided with a slot accommodating the full length in the length direction; the semi-enclosed plate and the fully-enclosed plate are detachably and fixedly mounted in a cable trough of an AFC in an one-upper and one-lower manner, respectively; the space in a cable trough is divided into three layers, namely an upper layer, a middle layer and a lower layer, by the fully-enclosed plate and the semi-enclosed plate; the guide device is mounted in the space of the lower layer within the full length of the cable trough; the towing cable trolley comprises a roller at an upper part, as well as a walking guide frame and a movable pulley at a lower part; the constraint cage towing rope device comprises a constraint cage at an upper part, and a walking guide frame at a lower part; the walking guide frames of the towing cable trolley and the constraint cage towing rope device are limited in the space of the middle layer of the cable trough and can only slide in the length direction of the cable trough back and forth; both the roller and the constraint cage are arranged above the semi-enclosed plate; the fixed pulleys are arranged outside two ends of a head-gate end of the cable trough and a tail-gate end of the cable trough of the AFC; the constraint cage towing rope device is relatively fixed and connected with a machine body of the coal mining machine; the cable clamp set is provided with one end connected with the machine body of the coal mining machine, and the other end extending to the position of the head-gate end of the cable trough or the tail-gate end of the cable trough to be relatively fixed with the head-gate end of the cable trough or the tail-gate end of the cable trough; the remaining part of the cable clamp set bypasses the roller and goes through the constraint cage in the length direction of the cable trough; compared with the connection of the machine body of the coal mining machine and the towing cable trolley as well as the cable clamp set, the constraint cage towing rope device is closer to the other end of the cable clamp set; the steel wire rope goes through the lower part of a guide pulley of the guide device when penetrating through the space of the lower layer of the cable trough; one end of the steel wire rope bypasses the fixed pulley at the head-gate end of the cable trough or the tail-gate end of the cable trough to change the direction, then extends to the head-gate end of the cable trough or the tail-gate end of the cable trough, and is indirectly connected with the lower part of the constraint cage towing rope device via the extension spring, and the other end of the steel wire rope bypasses the fixed pulley at the tail-gate end of the cable trough or the head-gate end of the cable trough to change the direction, then extends to the head-gate end of the cable trough or the tail-gate end of the cable trough, then bypasses the movable pulley of the towing cable trolley to change the direction again, extends to the tail-gate end of the cable trough or the head-gate end of the cable trough, and is fixed relative to the tail-gate end of the cable trough or the head-gate end of the cable trough; a cable and a water tube of the coal mining machine extend and are arranged in the cable clamp set; the length of the cable clamp set meets requirements as follows: when the coal mining machine is positioned at a start point of a working face and the cable clamp set is in a tensioning state, the position of an axis of the roller tends to an end point of the working face, and the distance between the position of the axis of the roller and the middle point of the working face is not shorter than one half of the length of the machine body of the coal mining machine.

2. The automatic towing cable system of the coal mining machine of claim 1, wherein a plurality of guide devices are provided, and every cable trough is internally equipped with one guide device.

3. The automatic towing cable system of the coal mining machine of claim 2, wherein the guide devices further comprise U-shaped parts and fixed blocks, the guide pulleys are rotationally supported on axles via bearings, two ends of each axle are mounted on the corresponding fixed block, the fixed blocks are fixed in the inverted U-shaped parts, and the inverted U-shaped parts are detachably suspended and mounted on the fully-enclosed plate.

4. The automatic towing cable system of the coal mining machine of claim 3, wherein each guide device is provided with at least three guide pulleys, the plurality of guide pulleys are arranged at intervals in the length direction of the guide device, the guide pulleys at two ends are horizontally swung relative to the U-shaped part within limits, the guide pulley at the middle is fixed relative to the U-shaped part, and the axis of the guide pulley at the middle extends in the width direction of the guide device.

5. The automatic towing cable system of the coal mining machine of claim 4, wherein the guide pulleys at the two ends are horizontally swung relative to the U-shaped part within limits in the manner: (1) a plurality of pairs of axle holes used for mounting the axles are formed at intervals in the length direction of the guide device, and the axle holes closest to the two ends are kidney-shaped holes extending in the length direction of the guide device; or (2) each guide pulley corresponds to one fixed block, two ends of the axle of each guide pulley are fixedly mounted on the corresponding fixed block, and tops of the two fixed blocks closest to the two ends are horizontally and rotationally connected relative to the U-shaped part and are limited in rotational angle range by arranging a limit device at the same time.

6. The automatic towing cable system of the coal mining machine of claim 1, 2, 3, 4 or 5, wherein the walking guide frame comprises a front strip-shaped body and a back strip-shaped body arranged in parallel, and left and right ends of the strip-shaped bodies are shaped like rectangular pyramids.

7. The automatic towing cable system of the coal mining machine of claim 6, wherein an axis of the roller on the towing cable trolley is arranged horizontally in the gob-goaf direction, an axis of the movable pulley is arranged vertically, and the movable pulley is arranged between the front strip-shaped body and the back strip-shaped body of the walking guide frame on the towing cable trolley.

8. The automatic towing cable system of the coal mining machine of claim 1, 2, 3, 4 or 5, wherein a lug is arranged at the top of the constraint cage, and is fixedly connected with a machine body of the coal mining machine via a shaft extension connector.

9. The automatic towing cable system of the coal mining machine of claim 1, 2, 3, 4 or 5, wherein a fixed pulley provided with an enclosed housing is adopted as the fixed pulley.

10. The automatic towing cable system of the coal mining machine of claim 1, 2, 3, 4 or 5, wherein the slot is formed in the middle of the width direction of the cable trough.
